(19) **Europäisches Patentamt**
**European Patent Office**
**Office européen des brevets**

(11) **EP 2 226 303 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**28.11.2018 Patentblatt 2018/48**

(45) Hinweis auf die Patenterteilung:
**09.10.2013 Patentblatt 2013/41**

(21) Anmeldenummer: **10001178.2**

(22) Anmeldetag: **05.02.2010**

(51) Int Cl.:
*C03C 1/00* *(2006.01)*    *C03C 10/00* *(2006.01)*

(54) **Verfahren zum umweltfreundlichen Schmelzen und Läutern einer Glasschmelze für ein Ausgangsglas einer Lithium-Aluminium-Silikat (LAS)-Glaskeramik**

Method for environmentally friendly melting and refining a glass melt for an initial glass of a lithium-aluminium silicate (LAS) glass ceramic

Procédé écologique de fusion et d'affinage d'un bain de verre pour un verre de sortie d'un système vitrocéramique en lithium-aluminium-silicate (LAS)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.03.2009 DE 102009011850**

(43) Veröffentlichungstag der Anmeldung:
**08.09.2010 Patentblatt 2010/36**

(73) Patentinhaber: **Schott AG**
**55122 Mainz (DE)**

(72) Erfinder:
• **Schönberger, Klaus**
  **55126 Mainz (DE)**
• **Siebers, Friedrich**
  **55283 Nierstein (DE)**
• **Kosmas, Ioannis**
  **55271 Stadecken-Elsheim (DE)**
• **Stubenrauch, Matthias**
  **55286 Wörrstadt (DE)**
• **Blei, Horst**
  **55246 Mainz-Kostheim (DE)**
• **Best, Reiner**
  **55234 Albig (DE)**
• **Döring, Eckhart**
  **55278 Dolgesheim (DE)**
• **Jakob, Udo**
  **55234 Albig (DE)**

(74) Vertreter: **Mehler Achler**
**Patentanwälte Partnerschaft mbB**
**Bahnhofstraße 67**
**65185 Wiesbaden (DE)**

(56) Entgegenhaltungen:
| | |
|---|---|
| EP-A1- 1 757 564 | DE-A1- 19 939 787 |
| DE-A1- 19 939 787 | FR-A1- 2 902 420 |
| JP-A- 11 100 230 | JP-A- 2007 126 299 |
| US-A- 3 490 984 | US-A1- 2007 129 231 |
| US-A1- 2007 213 192 | |

EP 2 226 303 B2

**Beschreibung**

Die Erfindung bezieht sich auf ein Verfahren zum umweltfreundlichen Schmelzen und Läutern einer Glasschmelze für ein kristallisierbares Ausgangsglas einer Lithium-Aluminium-Silikat (LAS) -Glaskeramik.

Beim Schmelzen von Glas entstehen als Folge der chemischen Umsetzung der Ausgangsrohstoffe, des Gemenges, beachtliche Mengen an Gasen. Bei üblichen kostengünstigen Gemengeversätzen benötigt man ca. 1,3 kg Gemengerohstoffe für die Herstellung von etwa 1 kg Glas. Das bedeutet, dass während des Einschmelzens erhebliche Mengen von Gasen wie $H_2O$, $O_2$, $CO_2$, $SO_2$, $NO_x$, $N_2$ und im Gemenge eingeschlossene Luft freigesetzt werden. Den Verfahrensschritt zum Entfernen der Gasblasen aus der Glasschmelze bezeichnet man als Läuterung.

Beim Einlegen des Gemenges in die Schmelzwanne bildet sich ein Gemengehaufen auf der Glasschmelze aus, der sich als sogenannter Gemengeteppich unterschiedlich weit in die Schmelzwanne ausbreitet.

Bei der Erwärmung von Gemenge laufen sehr verschiedenartige Reaktionen ab, die zur Glasbildung führen. Eine Beschreibung dieser Reaktionen findet sich in dem Buch "Allgemeine Technologie des Glases, Grundlagen des Schmelzens und der Formgebung", Prof. Dr. H. A. Schaeffer, Erlangen September 1985. Diese Reaktionen gliedern sich mit aufsteigender Temperatur allgemein in:

- Dehydratisierung
- Festkörperreaktionen im Bereich der Kornkontakte (z.B. Silicatbildung)
- Bildung karbonatischer Schmelzen, die die Quarzkörner umhüllen
- Zersetzungsreaktionen, die Blasen erzeugen ($CO_2$, $NO_x$, $O_2$, $SO_3$)
- Bildung silikatischer Schmelzen

Anschließend findet die Auflösung der restlichen Bestandteile des Gemenges in der silikatischen Schmelze statt.

Unter den Temperaturbedingungen des Einschmelzens des Gemenges laufen diese genannten Reaktionen mehr oder weniger nebeneinander ab. Die Hauptmenge der Gase entweicht während der Gemengereaktionen und der Bildung der Rauhschmelze durch die Gemengedecke.

Diese Reaktionsschritte laufen auch bei üblichen Rohstoffversätzen für das Gemenge der Ausgangsgläser von Lithium- Aluminium- Silikat (LAS)- Glaskeramiken ab. Hauptbestandteile sind hier in der Regel der Quarzsand als Quelle für die $SiO_2$- Glaskomponente, Aluminiumoxid oder Aluminiumtrihydroxid als Quelle für die $Al_2O_3$- Komponente und Lithiumkarbonat als Quelle für die $Li_2O$- Komponente. Des Weiteren enthält das Gemenge in der Regel Nitrate um den Oxidationszustand einzustellen. Bei der Temperaturerhöhung des Gemenges kommt es zunächst zur Wasserabgabe, dann zur Nitratzersetzung und anschließend zur Flüssigphasenbildung. Entscheidend für das Einschmelzen ist die Bildung eines Eutektikums aus den Hauptbestandteilen $Li_2O$ und $SiO_2$ bei ca. 1030 °C. In dieser ersten flüssigen Lithiumreichen Silikatphase beginnen sich die restlichen kristallinen Rohstoffe wie Aluminiumoxid, Quarzsand, Zirkon, das Läutermittel, sowie ein Teil der restlichen Gase wie zum Beispiel $O_2$, $CO_2$, $NO_x$, $N_2$ und $SO_2$ zu lösen. Bei zunehmender Auflösung der restlichen kristallinen Rohstoffe in der flüssigen Phase verringert sich die Gaslöslichkeit der flüssigen Phase und es kommt zur Blasenbildung. Dabei wachsen oder schrumpfen die Blasen, wenn der Blaseninnendruck niedriger oder höher ist als der Gleichgewichtsdruck der gelösten Gase. Gelöste Gase müssen daher während der Läuterung ausgeschieden oder auf ein nicht mehr störendes Maß verringert werden.

Der gelöste Gasrest im Endprodukt ist entscheidend für das Nachgasen (Reboil) und sollte deshalb so klein als möglich sein.

Quarzsand und Zirkonsilikat bzw. Zirkonoxid sind die letzten Gemengerohstoffe, die in der Glasschmelze gelöst werden. Sie sind diejenigen Rohstoffe die die Schmelzzeit bestimmen und bei denen, bei zu hohen Wannendurchsätzen die Gefahr von Gemengerelikten besteht. Die Auflösegeschwindigkeit ist bei den LAS-Gläsern gering und anhaftende Blasen bringen die kristallinen Phasen an die Oberfläche der Glasschmelze. Die Ausbildung von Oberflächenschichten aus Restquarz bzw. dem daraus bei hohen Temperaturen gebildeten Cristobalit ($SiO_2$) und Baddeleyit ($ZrO_2$) ist besonders ausgeprägt bei Aluminosilikatgläsern.

Die Art des Ablaufs des Einschmelzens mit gezielter Gemengerohstoffauswahl, Ausbildung des Gemengeteppichs und Temperatur des Glases im Einschmelzbereich hat somit entscheidende Konsequenzen für alle nachfolgenden Teilschritte der Glasherstellung bis hin zur Produktqualität. Ist die Abschmelzrate beim Einschmelzprozess durch zu hohen Wannendurchsatz nicht auf die Entnahme am Verarbeitungsende abgestimmt, kommt es zu Qualitätsproblemen (Gemengerelikte, Blasen) im Glas. Die schwer löslichen Gemengerohstoffe gelangen über die Oberflächenschicht oder über die Tiefenströmung in hintere Bereiche der Schmelzwanne. Bei ihrer Auflösung verringert sich die Gaslöslichkeit in der chemisch veränderten Zone um die Gemengekörner und es kommt zu dem beschriebenen Effekt der Blasenbildung. Die sich auflösenden Restquarzkörner sind Fremdkeime für eine ständige Blasenneubildung (Nölle, Günther, Technik der Glasherstellung, Deutscher Verlag für Grundstoffindustrie Stuttgart 1997, 3. Auflage, S. 83). Mikroskopische Aufnahmen, die solche Blasen am Rand sich auflösender Restquarzpartikel zeigen belegen diesen Mechanismus. Solche Blasen, die in einem späten Stadium des Schmelzprozesses erzeugt werden, können kaum noch aus der Glasschmelze entfernt werden.

Eine gezielte Auswahl der Gemengerohstoffe hat daher das Potential, die Größe des Gemengeteppichs und die Ausbildung der Oberflächenschichten zu verringern. Durch Verringerung der schwer löslichen Gemengerohstoffe wird die Gefahr von Gemengerelikten und späten Blasen vermindert. Maßnahmen, die zur Homogenisierung dienen, bewirken bekanntermaßen immer auch einen Beitrag zur Läuterung und umgekehrt. Ein Gemengerohstoff, der der Zusammensetzung des gewünschten Glases nahe kommt, ist daher von Vorteil. Auch bei der Produktion anfallende Glasscherben werden daher dem Gemenge zugesetzt.

Eine Verringerung des Gemengeteppichs und der Oberflächenschichtbildung begünstigt auch den für die Temperaturerhöhung der Glasschmelze benötigten Wärmeeintrag durch die Infrarotstrahlung von den Gasbrennern und durch Reflexion vom Gewölbe aus dem Oberbau der Wanne.

In einer typischen Schmelzwanne wird die Läuterung der Glasschmelze in einem dem Einschmelzen zeitlich nachgeschalteten Verfahrensschritt und in einem räumlich getrennten Bereich durchgeführt. Die beiden Bereiche werden durch den sogenannten Quellpunkt der Schmelzwanne getrennt. Der Quellpunkt ist der Ort der höchsten Temperatur der Glasschmelze, d. h. es erfolgt eine aufwärts gerichtete Strömung der Glasschmelze. Beim Design typischer Schmelzwannen werden bekanntermaßen verschiedene Einbauten verwendet:

- Überströmwall zur Vermeidung von Kurzschlussströmungen und zur Erzielung von Temperaturerhöhung durch geringe Glasstandshöhe
- Brückenwall zur Vermeidung von Kurzschlussströmungen, vor allem in der Oberfläche sowie der Vermeidung von Rückströmungen
- Gasbrenner, meist in Querrichtung angeordnet, die ihre Wärme durch Strahlung aus der Flamme bzw. durch Reflexion am Gewölbe in die Glasschmelze abgeben
- Elektrische Zusatzheizung zur Erhöhung der mittleren Glastemperatur • und Strömungsstabilisierung
- Blasdüsen in Anordnung quer und/oder längs zur Glasflussrichtung zur Vermeidung von Kurzschlussströmungen, zur Strömungsstabilisierung und zur Erhöhung der mittleren Glastemperatur durch Transport von kaltem Bodenglas an die heiße Oberfläche.

In der Regel wird der Quellpunkt in der Wanne durch die Energieverteilung (Einstellung der Gasbrenner und der elektrischen Zusatzheizung) oder durch zusätzliche konstruktive Maßnahmen wie einen Überstromwall, Blasdüsen oder elektrische Zusatzheizung am Wannenboden räumlich fixiert.

Der Brückenwall ist besonders geeignet, um dem Vordringen der bei LAS-Gläsern kritischen Oberflächenschichten in den hinteren Läuter- und Abstehbereich der Schmelzwanne entgegenzuwirken.

Die Glasstandshöhe ist der Infrarottransmission der Glasschmelze anzupassen. Generell ist eine zu große Glasstandshöhe zur Verhinderung von kalten Zonen im Boden zu vermeiden, was zur Erhöhung der mittleren Glastemperatur beiträgt.

Die Auswirkungen der Einbauten auf die Strömungsverhältnisse in der Schmelzwanne wird z. B. in dem bereits zitierten Buch von Nölle beschrieben und bildlich dargestellt (S. 87 ff.).

Bei der Läuterung unterstützt man das Bestreben der Gasblasen durch ihren statischen Auftrieb infolge des Dichteunterschiedes zwischen Gasblasen und Glasschmelze, in der Glasschmelze aufzusteigen und dann ins Freie zu entweichen. Dieser Vorgang braucht ohne unterstützende Läutermaßnahmen jedoch eine beträchtliche Zeit, die den Produktionsprozess wegen langer Standzeiten und daraus resultierendem geringen Wannendurchsatz verteuern würde.

Für LAS-Ausgangsgläser haben sich als Läuterverfahren in bekannter Weise verschiedene Methoden herausgebildet.

Als chemische Läutermittel für LAS-Ausgangsgläser haben sich insbesondere Arsen- und Antimonoxid in Gehalten von 0,3 bis 1,5 Gew.% bewährt. Diese Läutermittel setzen bereits bei konventionellen Läutertemperaturen um 1600 °C und darunter in der Glasschmelze $O_2$-Gase frei, die durch Diffusion in die Gasblasen gelangen. Die so zusätzlich in die Gasblasen gelangenden Gasmengen führen zum gewünschten Blasenwachstum und damit zu der gewünschten erhöhten Aufstiegsgeschwindigkeit der Gasblasen. Die aufsteigenden Gasblasen fördern die Homogenität der Glasschmelze und wirken der Oberflächenschicht entgegen. Diese Läutermittel sind verträglich mit den geforderten Glaskeramikeigenschaften und führen zu guten Blasenqualitäten der Schmelze.

Auch wenn diese Stoffe fest im Glasgerüst eingebunden sind, so sind sie unter Sicherheits- und Umweltschutzaspekten nachteilig. Bei der Rohstoffgewinnung, -aufbereitung und wegen der Verdampfung bei der Schmelze müssen besondere Vorsichtsmaßnahmen ergriffen werden.

Die Suche nach alternativen chemischen Läutermitteln, die unter Umweltgesichtspunkten weniger bedenklich sind, hat zum Einsatz von Zinnoxid geführt. Die Substitution des umweltschädlichen Arsen- oder Antimonoxids durch Zinnoxid allein ist wegen unzureichender Blasenqualitäten bei wirtschaftlichen Wannendurchsätzen nicht ohne Weiteres möglich. Wegen der geringen Löslichkeit des Zinnoxids in den LAS-Ausgangs-gläsern ist der maximale Gehalt auf Werte von kleiner 0,6 Gew.% und darunter begrenzt. Ansonsten kommt es wegen der geringen Löslichkeit zur Entglasung bei der Formgebung. Die bei der Entglasung gebildeten Sn-haltigen Kristalle beeinträchtigen die Festigkeit des Glases und der daraus hergestellten Glaskeramik. Höhere Läutermittelkonzentrationen, wie bei der chemischen Läuterung mit Arsen- oder Antimonoxid sind daher nicht möglich. Des Weiteren setzt Zinnoxid den für die Läuterung benötigen Sauerstoff erst bei höheren Temperaturen in ausreichenden Mengen frei. Das verringert die Effizienz des Einsatzes von Zinnoxid als Läutermittel bei üblichen konventionellen Schmelztemperaturen bis zu 1700 °C. Auch der günstige Effekt der Homogenisierung der Glasschmelze, der der Ausbildung von Oberflächenschichten entgegenwirkt ist wegen der geringen Mengen des freigesetzten $O_2$-Läutergases weniger ausgeprägt.

Es ist also daher nach Wegen gesucht worden, die Läuterwirkung des Zinnoxids durch zusätzliche Maßnahmen zu verstärken.

Um gute Blasenqualitäten zu erreichen, werden beispielsweise bei konventionellen Schmelz- und Läutertemperaturen (max. 1700 °C) neben Zinnoxid weitere Läutermittel eingesetzt. Eine Reihe von Schriften beschreibt den Einsatz von Halogenidverbindungen als zusätzliche Läutermittel.

So wird in den japanischen Anmeldungen JP 11 100 229 A und JP 11 100 230 A der Einsatz von 0,1 - 2 Gew.-% $SnO_2$ und 0 - 1 Gew.-% Cl beschrieben. Nach diesen Schriften wird eine Einfärbung durch Zusatz von $V_2O_5$ als alleiniges Färbemittel vorgenommen. Der Zusatz von 0,05 - 1 Gew.-% Fluor (US 2007 0004578 A1) und 0,01 - 1 Gew.-% Brom (US 2008 0026927 A1) zur Unterstützung der Läuterung mit $SnO_2$ wird ebenfalls offenbart. Das Hauptfärbemittel ist $V_2O_5$. Der Zusatz der Halogenidverbindungen ist nachteilig, da sie bei der Schmelztemperatur stark verdampfen und dabei toxische Verbindungen, wie z.B. HF oder HCl bilden. Diese Verbindungen greifen weiterhin die Feuerfeststeine in dem Gewölbe der Schmelzwanne chemisch an und es kommt zur Korrosion.

In der Schrift US 2007 0129231 A1 wird der kombinierte Einsatz von 0,15 bis 0,3 Gew. % $SnO_2$ in Kombination mit 0,7 bis 1,5 Gew. % $CeO_2$ und/oder $MnO_2$ als Läutermittel beschrieben. Verglichen mit der Läuterung durch $As_2O_3$ liefern diese Läutermittelkombinationen trotz der vergleichsweise hohen Gehalte an $CeO_2$ und/oder $MnO_2$ deutlich schlechtere Blasenqualitäten. Dies liegt daran, dass $CeO_2$ und $MnO_2$ den zum Läutern erforderlichen Sauerstoff bei vergleichsweise niedrigen Temperaturen abspalten und für die Läuterung hochschmelzender LAS-Ausgangsgläser weniger wirksam sind.

Da das Läutermittel Zinnoxid den zum Läutern erforderlichen Sauerstoff erst bei höheren Temperaturen ab ca. 1630 °C in größeren Mengen abgibt, bietet sich die Hochtemperaturläuterung oberhalb 1700°C zur Erreichung guter Blasenqualitäten an.

So ist z. B. aus der DE 199 39 771 B4 bekannt, mit separaten, der Schmelzwanne nachgeordneten Hochtemperatur-Läuteraggregaten mit Hochfrequenz- und Skulltechnologie höhere Temperaturen zwischen 1700 °C und 2800 °C zu erzeugen, um so die Viskosität der Schmelze zu verringern und damit die Aufstiegsgeschwindigkeit der Gasblasen zu erhöhen. Typischerweise sind dabei zwei unabhängige, miteinander verbundene Läuteraggregate vorgesehen.

Auch die WO 02/16279 A1 (= DE 199 39 787 A1) beschreibt u. a. die Herstellung einer mit $V_2O_5$ in Verbindung mit Reduktionsmitteln eingefärbten Lithium- Aluminium- Silikat (LAS)- Glaskeramik mittels Hochtemperaturläuterung bei 1975° C für 1 h ohne die Standard- Läutermittel Arsen- oder Antimonoxid, sondern mit alternativen Läutermitteln wie $SnO_2$, $CeO_2$, Sulfat- oder Chloridverbindungen. Diese in Aufsicht schwarz anmutende Glaskeramik wird typischerweise für die Herstellung von Kochflächen verwendet und ist unter der Markenbezeichnung CERAN SUPREMA® auf dem Markt.

Diese zusätzlichen Hochtemperatur-Läuteraggregate erfordern Investitionen in spezifische Aggregate und eine andere Verteilung des Energieeintrags. Auch eine Lehre, wie die Blasenqualität der Glaskeramik über die Bereitstellung eines definierten Gemenges und einer Läuterung mit Zinnoxid und Eisenoxid verbessert wird, was zu erheblichen technischen und wirtschaftlichen Vorteilen führt, vermittelt dieser Stand der Technik nicht.

Ein weiteres physikalisches Läuterverfahren stellt das sogenannte Unterdruckläutern dar. Beispielhaft sei hierzu auf die EP 0 908 417 A2 verwiesen. Beim Unterdruckläutern wachsen die in der Schmelze vorhandenen Blasen ebenfalls. Die Blasen werden durch diese Effekte größer, steigen schneller an die Oberfläche der Schmelze auf und können diese in den darüberliegenden Ofenraum verlassen. Für dieses Verfahren sind aufwändige Konstruktionen erforderlich.

Die DE 10 2005 039919 A1 beschreibt ein Verfahren zum Läutern einer Glasschmelze für ein Glaskeramik-Grünglas sowie eine entsprechend ausgebildete Schmelzwanne. Es wird ein Glasgemenge auf der Basis eines Lithium- Aluminium- Silikat (LAS)- Glassystems mit einem alleinigen Zusatz von Zinnoxid als Läutermittel mit einem Gehalt < 0,4 Gew. % unter Verzicht von Arsen- und/ oder Antimonoxid als Läutermittel bereitgestellt. Das Einschmelzen des Gemenges und Läutern der Schmelze wird bei Temperaturen < 1700° C unter Verzicht auf zusätzliche spezielle Hochtemperatur- Läuteraggregate durchgeführt. Abhängig von der Wannenkonstruktion, dem Läutermittelgehalt und der mittleren Glastemperatur ergibt sich für die geforderte Blasenqualität eine minimale Verweilzeit des zu läuternden Glases in der Wanne. Auch bei diesem Verfahren schlagen sich die Nachteile der reinen $SnO_2$- Läuterung bei konventionellen Läutertemperaturen in den limitierten Wannendurchsätzen nieder. Die Schrift beschreibt verschieden Schmelzwannen-Designs, die auch in der vorliegenden Erfindung berücksichtigt werden.

Schmelzwannen- Designs, die auch in der vorliegenden Erfindung berücksichtigt werden.

Es ist Aufgabe der Erfindung ein Verfahren zum umweltfreundlichen Schmelzen und Läutern einer Glasschmelze für ein Ausgangsglas einer Lithium- Aluminium- Silikat (LAS)- Glaskeramik bereitzustellen, das eine wirtschaftliche Herstellung bei mäßigen Läutermittelgehalten mit hinreichend geringen Blasenzahlen im Glas und damit auch im keramisierten Produkt gewährleistet.

Diese Aufgabe wird durch ein Verfahren gemäß des Anspruches 1 gelöst.

Die Lösung dieser Aufgabe gelingt erfindungsgemäß durch ein Verfahren zum umweltfreundlichen Schmelzen und Läutern einer Glasschmelze für ein Ausgangsglas einer Lithium- Aluminium- Silikat (LAS)- Glaskeramik mit den Schritten:

- Bereitstellen eines Glasgemenges auf der Basis eines Lithium- Aluminium- Silikat (LAS)- Glassystems mit Zusatz von 0,1- < 0,6 Gew. % Zinnoxid als Hauptläutermittel und 0,05- 0,3 Gew. % Eisenoxid für eine Kombinationsläuterung unter Verzicht von Arsen- und/ oder Antimonoxid als Läutermittel,
- Auslegen des Rohstoffversatzes für das Glasgemenge dahingehend, dass der Anteil des für die Einführung der Glaskomponente $SiO_2$ üblicherweise verwendeten Rohstoffs Quarzsand weniger als 40 Gew. %, bevorzugt weniger als 15 Gew. %, und besonders bevorzugt weniger als 5 Gew. % beträgt, und
- Läutern der Glasschmelze bei Temperaturen von mindestens 1600 und bevorzugt mindestens 1650 °C.

Das erfindungsgemäße Verfahren zum umweltfreundlichen Schmelzen und Läutern einer Glasschmelze für ein Ausgangsglas einer LAS-Glaskeramik zeichnet sich dadurch aus, dass bis auf unvermeidliche Spuren, auf die chemischen Läutermittel Arsen- und/oder Antimonoxid verzichtet wird und die gewünschten niedrigen Blasenzahlen durch Kombination mehrerer Maßnahmen erreicht werden.

Es wird Zinnoxid als Hauptläutermittel in Gehalten von 0,1 bis < 0,6 Gew. % eingesetzt. Wegen der beschriebenen Abgabe des zum Läutern erforderlichen Sauerstoffs bei höheren Temperaturen ist es weiter erforderlich, dass die Glasschmelze auf Temperaturen von mindestens 1600 °C und bevorzugt mindestens 1650 °C für die Läuterung erwärmt wird.

Es hat sich jedoch gezeigt, dass diese Maßnahmen allein nicht ausreichend sind. Für die aus wirtschaftlichen Gründen gewünschte Steigerung des Wannendurchsatzes ist es ebenso erforderlich, den Rohstoffversatz für das Glasgemenge bereits so auszulegen, dass der Anteil des für die Einführung der Glaskomponente $SiO_2$ üblicherweise verwendeten Rohstoffs Quarzsand minimiert wird. Bei höheren Gehalten bildet sich beim Aufschmelzen des Gemenges an der Glasoberfläche eine Schicht aus, die relativ weit in die Schmelzwanne hineinreicht. Diese Oberflächenschicht ist an den Gemengerelikten aus $SiO_2$ (Restquarz) und dem Zr-Rohstoff angereichert. Die Gemengeteilchen werden durch anhaftende Blasen an der Glasoberfläche gehalten. Durch die langsame Auflösung werden in späten Stadien des Schmelzprozesses Blasen erzeugt, die die Blasenqualität verschlechtern. Um den Quarzsand als Quelle für die Bildung von Blasen im späten Stadium des Prozesses zu minimieren, soll der Anteil des Quarzsandes am Rohstoffversatz für das Glasgemenge weniger als 40 Gew.% bevorzugt weniger als 15 Gew.% betragen. Bei der Berechnung werden etwaig zugesetzte Scherben nicht berücksichtigt, da es in erster Linie darauf ankommt, die in ihrer Zusammensetzung nicht mit dem LAS-Glas übereinstimmenden Gemengerohstoffe einzuschmelzen und zu homogenisieren. Besonders bevorzugt ist ein Anteil des Quarzsandes am Rohstoffversatz für das Glasgemenge von weniger als 5 Gew.%. Bei diesen niedrigen Werten erreicht man besonders gute Glasqualitäten hinsichtlich Blasenqualität, Homogenität und günstiges Einschmelzverhalten mit geringen Gemengerelikten in der Oberfläche.

Die genannten Maßnahmen sind in Kombination notwendig, um die gewünschten Blasenzahlen zu erreichen. Diese betragen weniger als 3 Blasen / kg Glas, bevorzugt weniger als 1 Blase/kg Glas. Bezogen sind diese Werte auf Blasengrößen die mindestens 100 μm betragen.

Der Verzicht von Arsen- und Antimonoxid als Läutermittel bedeutet, dass die erhaltenen Gläser im wesentlichen technisch frei sind von diesen Komponenten. Als Verunreinigungen liegen die Komponenten As oder Sb üblicherweise in Gehalten von weniger als 0,04 Gew.% vor.

Nach dem Verfahren wird eine Kombination der Läutermittel Zinnoxid und Eisenoxid eingesetzt, um verbesserte Ergebnisse hin-sichtlich Blasenqualität und Wirtschaftlichkeit zu erreichen. Während der Einsatz von Zinnoxid als Läutermittel bekannt ist, hat die Verwendung von Eisenoxid als Läutermittel technisch bisher keine besondere Beachtung gefunden. Das liegt zum einen daran, dass die Sauerstoffabgabe verbunden mit dem Übergang von $Fe^{3+}$ zum $Fe^{2+}$ ähnlich wie beim Zinnoxid erst bei hohen Temperaturen oberhalb ca. 1600 °C in größeren Mengen einsetzt. Weiterhin ist Eisenoxid ein Färbemittel und bei der Herstellung transparenter Gläser unerwünscht.

Wie sich gezeigt hat wird mit der Kombination der beiden Läutermittel die Effizienz beider Läutermittel deutlich erhöht. Dies wird durch Redoxwechselwirkungen zwischen beiden Läutermitteln erklärt. Bei Anwesenheit von Zinnoxid in der Glasschmelze wird ein höherer Anteil von $Fe^{2+}$ gefunden als bei einer Schmelze mit sonst gleicher Zusammensetzung, die kein Zinnoxid enthält. Diese Beobachtung stützt diese Erklärung.

Das Glasgemenge auf der Basis eines Lithium- Aluminium- Silikat (LAS)- Glassystems soll als Läutermittel eine Kombination von 0,1- < 0,6 Gew. % Zinnoxid und 0,05- 0,3 Gew. % Eisenoxid enthalten.

Da der Läuterungsprozess eng mit der Homogenisierung verbunden ist, ist es vorteilhaft, wenn ein Gemengerohstoff verwendet wird, der die Hauptkomponenten des LAS- Glases $SiO_2$, $Al_2O_3$ und $Li_2O$ bereits enthält und der der endgültigen Glaszusammensetzung nahe kommt. Dies wird erreicht in dem eine $Li_2O$- $Al_2O_3$- $SiO_2$-

Verbindung mehr als 70 Gew.% betragen. Bei der Berechnung werden etwaig zugesetzte Scherben nicht berücksichtigt.

In bevorzugter Weise werden als Hauptgemengerohstoff Petalit und/oder Spodumen eingesetzt. Deren Verwendung gestattet es, die drei Hauptkomponenten homogen in einem Verhältnis einzuführen, das der Zusammensetzung des LAS -Glases nahe kommt. Der Anteil des Quarzsandes im Gemenge ist für diesen Rohstoff minimal.

Durch diese Maßnahme wird auch der beim Einschmelzen des Gemenges entstehende Gemengeteppich minimiert. Die Minimierung des aufschwimmenden Gemengeteppichs unterstützt den Wärmeeintrag durch die Gasbrenner aus der Flamme und über Reflexion aus dem Wannengewölbe in die Glasschmelze. Dies ist vorteilhaft, weil damit die für Läuterung mit Zinnoxid und auch Eisenoxid positiven hohen Glastemperaturen begünstigt werden. Außerdem ist dies aus wirtschaftlichen Gründen von Vorteil, weil höhere Wannendurchsätze möglich sind und weniger Energieverluste entstehen.

Nach einem bevorzugten Verfahren wird das Glasgemenge für das LAS-Glassystem so bereitgestellt, dass das Verhältnis der bei der Läuterung maximal freigesetzten Menge des $O_2$-Läutergases (in Mol) in einer bestimmten Beziehung zur der Menge der bei der Gemengezersetzung freiwerdenden unlöslichen Fremdgase steht. Als unlösliche Fremdgase werden die bei der Zersetzung frei werdenden Gase, wie $CO_2$, $SO_2$, $NO_x$, $N_2$ bezeichnet, die nur sehr geringe Löslichkeit in LAS-Gläsern besitzen. Dem gegenüber wird das bekanntermaßen gut lösliche $H_2O$ nicht zu diesen unlöslichen Fremdgasen gerechnet. Die Beziehung auf der Basis der Gasmengen in Mol, die zu besonders guten Ergebnissen bei der Läuterung führen, lautet:

$$O_2 \; [Mol] \; / \; Fremdgase \; [Mol] \; > 0{,}02$$

Die Menge des freiwerdenden $O_2$-Läutergases soll mindestens 2 % der Menge der freiwerdenden unlöslichen Fremdgase betragen. Dadurch wird erreicht, dass für die Läuterung $O_2$-Läutergas in ausreichender Menge bereitsteht, das in die Blasen der unlöslichen Fremdgase eindiffundieren kann. Durch das Größenwachstum und beschleunigte Aufsteigen der Blasen werden diese bei der Läuterung aus der Glasschmelze entfernt.

Für die Homogenisierung der Glasschmelze und für ein verbessertes Einschmelzverfahren ist der Zusatz von 20 bis 60 Gew. % Scherben zum Glasgemenge vorteilhaft. Beim Einschmelzen wird die Ausbildung des Gemengeteppichs und der Oberflächenschicht weiter vermindert. Es handelt sich im wesentlichen um Scherben, die der Zusammensetzung des LAS-Glases entsprechen und die in der Produktion z. B. aus Bodenabläufen der Schmelzwanne oder als Verschnittreste beim Zuschnitt der Scheibenformate aus dem produzierten Glasband oder allgemein aus Produktionsausschuss anfallen. Um diesen günstigen Homogenisierungseffekt zu bewirken beträgt die Mindestmenge der zugesetzten Scherben 20 Gew.%. Die Menge soll aus wirtschaftlichen Gründen 60 Gew.% nicht übersteigen, da diese Scherben unter Einsatz von Energie erschmolzen wurden und man bestrebt ist, den Ausschuss gering zu halten.

Wie bereits ausgeführt wurde, ist es für die Temperaturerhöhung der Glasschmelze vorteilhaft, den Gemengeteppich und die Oberflächenschichtbildung zu verringern. Die von den Flammen der Gasbrenner selbst und durch Reflexion vom Wannengewölbe stammende Wärmeeinstrahlung tritt ungehindert in die Glasschmelze ein und wird absorbiert.

Abhängig von der Glasstandhöhe wird auch der Boden der Schmelzwanne mehr oder minder erwärmt. Ein zu kalter Wannenboden ist zu vermeiden, weil dadurch die Temperatur der Glasschmelze erniedrigt wird. Der Variation des Glasstandes in der Schmelzwanne zur Optimierung der Bodentemperatur ist aus technischen Gründen Grenzen gesetzt. Wenn der Glasstand sehr niedrig gewählt werden muss bedeutet das, bei vorgegebener Wannengröße für das Schmelzvolumen eine unwirtschaftliche große Grundfläche der Wanne. Bei zu großem Glasstand besteht die Gefahr, dass Tiefenblasen aufgrund der großen Aufstiegshöhe nicht aus der Schmelze entfernt werden können. Es ist deswegen vorteilhaft, wenn man die Infrarotabsorption der Glasschmelze so einstellt, dass für eine mittlere Glasstandhöhe von ca. 50 bis 100 cm gute Absorptionsbedingungen für die Wärmestrahlung aus dem Oberbau der Wanne erreicht werden. Damit wird ein guter Wärmeeintrag zur Temperaturerhöhung der Glasschmelze bewirkt. Die Infrarotabsorption der Glasschmelze darf nicht zu hoch sein damit der Wannenboden nicht zu kalt wird und die Glasschmelze hinreichend homogen in der Tiefe durchwärmt wird. Andererseits muss vermieden werden, dass der Wannenboden mit den Feuerfeststeinen zu heiß wird. Bei zu hoher Erhitzung der Feuerfeststeine können diese durch Reaktion mit der Glasschmelze zur Quelle sekundärer Blasen werden. Die beiden Forderungen werden gut miteinander vereinbart, wenn die Infrarotabsorption des Glases gemessen bei 1600 nm, bei Raumtemperatur und 4 mm Dicke einem Wert von 40 bis 80 % entspricht. Da die Glaskomponenten und auch das optional zur Farbgebung eingesetzte $V_2O_5$ im Infraroten wenig absorbieren, kommt dem Läutermittel Eisenoxid und hier insbesondere dem $Fe^{2+}$-Anteil eine entscheidende Rolle für die Einstellung der Infrarotabsorption der Glasschmelze zu. Dies gelingt mit den erfindungsgemäßen Gehalten von 0,05 bis 0,3 Gew.%.

Durch die erfindungsgemäße Kombination der beschriebenen Maßnahmen zum Läutern gelingt es auf wirtschaftliche Weise, bei mäßigen Läutermittelgehalten die Läuterung bei Temperaturen der Glasschmelze von weniger als 1700 °C durchzuführen. Bei diesen Läutertemperaturen ist die Läuterung noch in konventionellen Schmelzwannen ohne Zusatzaggregate wie z. B. spezielle Hochtemperatur- oder Unterdruck-Läuteraggregate mit den geforderten Blasenqualitäten durchzuführen. Der wirtschaftliche Vorteil besteht darin, dass die Investitionskosten für die zusätzlichen Aggregate eingespart werden.

Bei der Läuterung in einer konventionell aufgebauten Schmelzwanne wird diese Temperatur am Quellpunkt erreicht. Durch die aufwärts gerichtete Strömung am Quellpunkt gelangen die Blasen in die Nähe der Oberfläche. Damit ist auch die Strecke minimal, die Blasen bis zu ihrer Entfernung aus der Glasschmelze zurückzulegen haben. Wenn die Glastemperatur hier hoch ist, bedeutet das eine geringe Viskosität des Glases und damit hohe Aufstiegsgeschwindigkeiten von Blasen, die zudem durch die hohen Temperaturen aufgeweitet werden. Um diese lokale Temperatureinstellung in der Schmelzwanne zu erreichen, wird bevorzugt ein Wannendesign gewählt, bei dem sowohl elektrisch mit Elektroden als auch mit Gasbrennern beheizt wird.

Bei einem alternativen Verfahren kann es vorteilhaft sein, die Läuterung der Glasschmelze bei Temperaturen von größer als 1700 °C bevorzugt größer als 1750 °C durchzuführen. Dies ist insbesondere dann der Fall, wenn hohe Anforderungen an die Blasenqualität gestellt werden und/oder wenn für eine vorgegebene Größe der Schmelzwanne höhere Wannendurchsätze gewünscht sind. Eine Schmelzwanne mit einem Hochtemperaturläuteraggregat ist auch flexibler gegenüber der zu schmelzenden Glaszusammensetzung. Wenn aus technischen Gründen, z. B. bedingt durch spezielle Anforderungen an das Glaskeramikprodukt, Glaszusammensetzungen mit höheren Schmelzviskositäten erforderlich sind, so sind diese durch den Einsatz der Hochtemperaturläuterung ebenfalls ohne technische Probleme mit zufriedenstellender Blasenqualität zu läutern.

Bevorzugt wird bei dem erfindungsgemäßen Verfahren ein Glasgemenge für ein LAS-Glassystem bereitgestellt das zu einer eingefärbten Glaskeramik mit Hochquarz-Mischkristallen als vorherrschende Kristallphase führt, mit einer Zusammensetzung in Gew.% auf Oxidbasis, die im wesentlichen besteht aus:

| | |
|---|---|
| $Li_2O$ | 3,0 - 4,2 |
| $\sum Na_2O+K_2O$ | 0,2-1,5 |
| MgO | 0-1,5 |
| $\sum CaO+SrO+BaO$ | 0-4 |
| ZnO | 0-2 |
| $B_2O_3$ | 0-2 |
| $Al_2O_3$ | 19 - 23 |
| $SiO_2$ | 60-69 |
| $TiO_2$ | 2,5-4 |
| $ZrO_2$ | 0,5-2 |
| $P_2O_5$ | 0-3 |
| $SnO_2$ | 0,1 - < 0,6 |
| $\sum TiO_2+ZrO_2+SnO_2$ | 3,8-6 |
| $V_2O_5$ | 0,01 - 0,06 |
| $Fe_2O_3$ | 0,05 - 0,3 |

Der Begriff "im wesentlichen besteht aus" bedeutet, dass die aufgeführten Komponenten wenigstens 96 % in der Regel 98 Gew.% der Gesamtzusammensetzung betragen sollen. Eine Vielzahl von Elementen wie z. B. F, Cl oder die Alkalien Rb, Cs sind bei den großtechnisch verwendeten Gemengerohstoffen übliche Verunreinigungen. Andere Verbindungen wie z.B. solche der Elemente Ge, Seltene Erden, Bi, W, Nb, Ta, Y können in geringen Anteilen zugesetzt werden.

Einige polyvalente Komponenten wie die Läutermittel $SnO_2$ und $Fe_2O_3$ sowie $V_2O_5$ sind wie üblich in ihrer höheren Oxidationsstufe aufgeführt. Ein gewisser Anteil dieser Komponenten wird sich im geschmolzenen Glas bekanntermaßen aufgrund der mit der Schmelztemperatur zunehmenden Sauerstoffabgabe in der niedrigeren Wertigkeitsstufe finden.

Neben dem Farboxid $V_2O_5$ in Gehalten von 0,01 bis 0,06 Gew.% können auch weitere färbende Komponenten wie z. B. Chrom-, Mangan-, Kobalt-, Nickel-, Kupfer-, Selen-, Selten Erd-, Molybdänverbindungen eingesetzt werden, um die Färbung zu unterstützten. Ihr Gehalt ist auf Mengen von maximal etwa 1 Gew.% begrenzt, weil diese Verbindungen in der Regel die Transmission im Infrarot absenken.

Der Wassergehalt der Ausgangsgläser zur Herstellung der erfindungsgemäßen Glaskeramiken liegt abhängig von der Wahl der Gemengerohstoffe und der Prozessbedingungen bei der Schmelze üblicherweise zwischen 0,015 und 0,06 mol/l. Dies entspricht β-OH-Werten von 0,16 bis 0,64 mm$^{-1}$ für die Ausgangsgläser.

Um die Blasenqualität zu verbessern können neben den eingesetzten Hauptläutermitteln Zinnoxid und Eisenoxid zusätzlich weitere Läuterzusätze wie z.B. $CeO_2$, Sulfat-, Sulfid- und Halogenidverbindungen eingesetzt werden. Deren Gehalte sind üblicherweise auf Mengen bis 1 Gew. % begrenzt.

Die Oxide $Li_2O$, $Al_2O_3$ und $SiO_2$ in den bevorzugten, angegebenen Grenzen sind notwendige Bestandteile der Hochquarz-Mischkristalle. Die Zugabe der Alkalien $Na_2O$ und $K_2O$ in Gehalten von 0,2 bis 1,5 Gew. % verbessert die Schmelzbarkeit und die Entglasungsstabilität bei der Formgebung des Glases.

Weiterhin sind Zusätze von $TiO_2$ und $ZrO_2$ in den angegebenen Mengen als Keimbildner für die Kristallisation bei der Herstellung der Glaskeramik erforderlich. Die Menge der Komponenten mit keimbildender Wirkung $TiO_2$, $ZrO_2$ und $SnO_2$ soll zusammen 3,8 bis 6 Gew. % betragen um die Keimbildung bei der Kristallisation der Glaskeramik sicherzustellen, ohne dass bereits Entglasungsprobleme auftreten.

Zur Einfärbung der Glaskeramik im Sichtbaren wird das Farboxid $V_2O_5$ in Bereichen von 0,01 bis 0,06 Gew. % eingesetzt. Zusammen mit dem $Fe_2O_3$ gestattet diese Kombination der beiden Färbemittel einen Transmissionsverlauf einzustellen, wie er für Glaskeramiken gewünscht ist, die als Kochflächen Verwendung finden. Neben der aufgeführten Infrarottransmission von ca. 40 - 80 % bei 1600 nm und 4 mm Dicke sind dies vor allem eine Lichttransmission (brightness Y) von 0,8 bis 2,5 % und eine Transmission bei der Wellenlänge der Emission roter Leuchtdioden von 630 nm, die 3 bis 9 % beträgt. Die angegebene Zusammensetzung ist bevorzugt auf die Herstellung dunkel eingefärbter Glaskeramiken gerichtet.

Als weitere optionale Komponenten können MgO, ZnO und $P_2O_5$ in die Hochquarz-Mischkristalle eingebaut werden. Die Erdalkalien CaO, SrO, BaO sowie $B_2O_3$ verbessern die Schmelzbarkeit und die Entglasungsstabilität bei der Formgebung des Glases.

Mit dem angegebenen Zusammensetzungsbereich verbindet man die Forderungen die von Seiten des Herstellprozesses und der Anwendung gestellt werden. Schmelze, Läutern und Keramisierung der LAS-Gläser sind technisch, wirtschaftlich und in umweltfreundlicher Weise gewährleistet. Die Anforderungen die von der Anwendung der Glaskeramikprodukte insbesondere als Kochfläche gestellt werden, wie z. B. Temperaturbelastbarkeit, chemische Beständigkeit und Transmission werden vorteilhaft bedient.

Für eine wirtschaftliche Herstellung soll das kristallisierbare LAS-Glas gut schmelzbar und läuterbar sein und über eine hohe Entglasungsfestigkeit verfügen. Für die Beurteilung dieser Eigenschaften ist die Viskositätskurve der Glasschmelze von Bedeutung. Die Viskosität mit einem Wert von $10^4$ dPas soll bei einer Temperatur von höchstens 1320 und bevorzugt höchstens 1310 °C erreicht werden. Der Viskositätswert von $10^2$ dPas soll bei einer Temperatur von höchstens 1750 °C erreicht werden. Um die Viskosität der Glasschmelze abzusenken, hat es sich als notwendig erwiesen, den Gehalt an $SiO_2$, $Al_2O_3$, $ZrO_2$ zu verringern, während die Gehalte an Alkalien $Na_2O$ und $K_2O$, Erdalkalien CaO, SrO und BaO bei höheren Werten gewählt werden. Die Verringerung des $ZrO_2$-Gehalts auf maximal 1,6 Gew.% ist auch vorteilhaft um die Ausbildung der Oberflächenschicht mit Gemengerelikten des langsam löslichen Zr-Rohstoffs zu verringern.

Für die Verbesserung der Entglasungsfestigkeit ist es vorteilhaft, die Gehalte $Li_2O$, $Al_2O_3$, $SiO_2$, $ZrO_2$ und $SnO_2$ abzusenken, da diese Komponenten für die Entglasung kritische Kristallphasen bilden können. Um die genannten Vorteile zu realisieren wird nach einem bevorzugten Verfahren ein Glasgemenge für ein LAS-Glassystem bereitgestellt, das zu einer eingefärbten Glaskeramik mit Hochquarz-Mischkristallen als vorherrschenden Kristallphase führt mit einer Zusammensetzung in Gew.% auf Oxidbasis, die im wesentlichen besteht aus:

| | |
|---|---|
| $Li_2O$ | 3,2 - 4,0 |
| $Na_2O$ | 0,2 - 1 |
| $K_2O$ | 0,1 - 1 |
| $\sum Na_2O+K_2O$ | 0,4 - 1,2 |
| MgO | 0,1 - 1,2 |
| CaO | 0,2 - 1 |
| SrO | 0 - 1 |
| BaO | 0-3 |
| $\sum CaO+SrO+BaO$ | 0,2 - 4 |
| ZnO | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |

(fortgesetzt)

| | |
|---|---|
| $ZrO_2$ | 0,5 - 1,6 |
| $P_2O_5$ | 0 - 1,5 |
| $SnO_2$ | 0,1 - 0,5 |
| $\Sigma\ TiO_2+ZrO_2+SnO_2$ | 4,2 - 6 |
| $V_2O_5$ | 0,01 - 0,05 |
| $Fe_2O_3$ | 0,08 - 0,15 |

Der Eisengehalt $Fe_2O_3$ ist auf 0,08 bis 0,15 Gew.% eingestellt, um den Transmissionsverlauf der Glaskeramik im Infraroten und im Sichtbaren zu optimieren.

Nach einem bevorzugten Verfahren wird ein Glasgemenge für ein LAS-Glassystem bereitgestellt, bei dem der Gehalt des Läutermittels Zinnoxid auf Werte von < 0,35 bevorzugt < 0,3 Gew.% eingestellt ist. Die Reduzierung des $SnO_2$ ist vorteilhaft um die Entglasungsfestigkeit bei der Formgebung zu verbessern. Weiterhin wird die Korrosionsneigung an Edelmetalleinbauten in der Schmelzwanne verringert. Das Zinnoxid reagiert insbesondere mit Pt-haltigen Einbauten wie z. B. Rührern, Elektroden oder der Ziehdüse und kann deren Lebensdauer herabsetzen.

In bevorzugter Weise besitzt das Glasgemenge für das LAS- Glas einen $V_2O_5$- Gehalt von weniger als 0,04 und bevorzugt weniger als 0,03 Gew. %. Da Vanadiumoxid ein kostspieliger Rohstoff ist, ist es wirtschaftlich vorteilhaft den Gehalt von $V_2O_5$ zu minimieren. Weiterhin ist das Vanadiumoxid als Gefahrstoff eingestuft und daher unter Umweltgesichtspunkten nicht unbedenklich. Mit den erfindungsgemäßen Zusammensetzungen gelingt es bei diesen niedrigen $V_2O_5$- Gehalten auch im Bereich des sichtbaren Lichtes ab 450 nm eine Transmission von > 0,2 % einzustellen, was für die Anzeigefähigkeit einer Kochfläche mit blauen, grünen, gelben, orangen oder weißen Leuchtdioden vorteilhaft ist. Die übliche Anzeigefähigkeit mit den bewährten roten Leuchtdioden wird unverändert gewährleistet.

Vorzugsweise findet ein nach dem erfindungsgemäßen Verfahren geschmolzenes und geläutertes LAS-Ausgangsglas nach Umwandlung in die Glaskeramik mit Hochquarz-Mischkristallen als vorherrschende Kristallphase Verwendung als Kochfläche. Geeignete Formgebungsverfahren für die benötigte plattenförmige Geometrie sind Walzen und Floaten.

Üblicherweise werden für Kochflächen Glaskeramikplatten in Dicken von 2,5 bis 6 mm eingesetzt.

Aufgrund des mit der erfindungsgemäßen Zusammensetzung einhergehenden günstigen Transmissionsverlaufs verfügt die Kochfläche über verbesserte farbige Anzeigefähigkeit für blaue, grüne, gelbe, orange und weiße Leuchtdioden. Es sind alle Formen von Anzeigen, punktuelle wie flächige möglich. Aufgrund des gleichmäßigen spektralen Verlaufs der Transmission im Sichtbaren können erstmalig auch farbige Displays oder Bildschirme dargestellt werden.

Durch die Walzformgebung kann die Kochflächenunterseite mit üblichen Noppen versehen werden oder glatt ausgeführt sein. Es können Bereiche mit kleinerer Dicke für Displayanzeigen eingewalzt werden.

Als Beheizung für die Kochfläche können Strahlungsheizkörper, Halogenheizkörper, Induktionsbeheizung oder Gas eingesetzt werden.

Die Kochfläche kann dabei nicht nur als ebene Platte, sondern auch dreidimensional geformt sein. Abgekantete, gewinkelte oder gewölbte Platten können verwendet werden. Die Kochflächen sind technisch frei von Arsen- und/oder Antimonoxid. Die Kombinationsläuterung mit Zinnoxid und Eisenoxid bei Temperaturen von mindestens 1600 °C sowie die Verwendung eines erfindungsgemäß eingestellten Rohstoffversatzes für das Glasgemenge führt zu guten Blasenqualitäten von < 3 und bevorzugt < 1 Blase/kg in der Kochfläche.

Die vorliegende Erfindung wird mit Hilfe der folgenden Beispiele weiter verdeutlicht.

Die Tabelle 1 zeigt die Zusammensetzung des erfindungsgemäßen Ausgangsglases für eine Lithium-Aluminium-Silikatglaskeramik in Gew.% auf Oxidbasis sowie die verschiedenen Verbindungen die als Gemengerohstoffe für die Komponenten eingesetzt werden. Bei der Berechnung des Rohstoffversatzes ist zu beachten, dass einige Rohstoffe je nach Qualität auch gewisse Mengen von Verunreinigungen enthalten. So enthält z. B. der Spodumen je nach Handelsqualität unterschiedliche $Li_2O$-Gehalte und auch gewisse Mengen an Kalium-, Natrium- und Kalzium-Feldspat, sowie $Fe_2O_3$. Dies muss bei der Berechnung des Gemengesatzes berücksichtigt werden, um die gewünschte Zusammensetzung des LAS-Glases zu erhalten.

Das Glas Nr. 2 ist ein Vergleichsglas, das mit Arsenoxid statt Zinnoxid geläutert ist und sonst gleiche Zusammensetzung besitzt. Das als Gemengerohstoff eingesetzte $As_2O_3$ wird beim Einschmelzen mit Sauerstoff aus der Wannenatmosphäre oder der Nitrat-Zersetzung zu $As_2O_5$ umgesetzt.

Tabelle 1: Zusammensetzung (in Gew.%) des erfindungsgemäßen LAS-Glases Nr. 1 und des Vergleichsglases Nr. 2 sowie eingesetzte Rohstoff-Verbindungen

| | Glas Nr. 1 | Glas Nr. 2 | Rohstoff-Verbindungen |
|---|---|---|---|
| $Li_2O$ | 3,84 | 3,81 | Je nach Beispiel: Spodumen, Petalit, Lithium-karbonat |
| $Na_2O$ | 0,59 | 0,59 | Natrium-Feldspat, Natriumnitrat |
| $K_2O$ | 0,28 | 0,28 | Kalium-Feldspat, Kaliumnitrat |
| MgO | 0,31 | 0,31 | Magnesit, Dolomit |
| CaO | 0,42 | 0,42 | Dolomit, Kalzium-Feldspat |
| BaO | 2,29 | 2,27 | Bariumkarbonat |
| ZnO | 1,50 | 1,49 | Zinkoxid |
| $Al_2O_3$ | 20,60 | 20,44 | Aluminiumtrihydroxid, sowie je nach Beispiel: Spodumen, Petalit |
| $SiO_2$ | 65,33 | 64,84 | Quarzsand, sowie je nach Beispiel: Spodumen, Petalit |
| $TiO_2$ | 3,12 | 3,10 | Titandioxid |
| $ZrO_2$ | 1,36 | 1,35 | Zirkonsilikat |
| $SnO_2$ | 0,24 | - | Zinnoxid |
| $V_2O_5$ | 0,024 | 0,024 | Vanadiumoxid |
| $Fe_2O_3$ | 0,095 | 0,094 | Eisenoxid |
| $As_2O_3$ | - | 0,99 | Arsenoxid |
| Summe | 100,00 | 100,00 | |
| | | | |
| **Eigenschaften** | | | |
| Tg [°C] | 670 | | |
| $V_A$[°C] | 1305 | | |
| $T(\eta = 10^2$ dPas) [°C] | 1734 | | |
| Dichte g/cm$^3$ | 2,479 | | |
| therm Ausdehnung $\alpha$ 20/300·[$10^{-6}$/K] | 4,3 | | |
| OEG [°C] | 1235 | | |
| IR-Transmission 1600 nm [%] | 76,3 | | |

In der Tabelle 1 sind auch einige am Glas gemessenen Eigenschaften wie Dichte, Transformationstemperatur Tg, Verarbeitungstemperatur $V_A$, die Temperatur für die Viskosität $10^2$ dPas, die thermische Ausdehnung zwischen 20 und 300 °C und die obere Entglasungstemperatur OEG aufgeführt. Die Infrarottransmission bei 1600 nm wurde für 4 mm Dicke bestimmt.

Bei den Laborversuchen zur Variation der Rohstoffversätze für das Glasgemenge des LAS-Glases wurden ca. 2 kg gut vorgemischtes Glasgemenge in Platintiegel eingelegt. Die Tiegel hatten eine Höhe von ca. 250 mm und einen Durchmesser von ca. 70 mm. Die Tiegel wurden in einen Ofen mit homogener Temperatur eingestellt und das Glasgemenge wurde aufgeschmolzen. Die Versuche zur Beurteilung des Einschmelzverhaltens wurden bei 1600 °C, 1 h durchgeführt (Tabelle 2).

Tabelle 2: Einschmelzversuche von Rohstoffgemengen (1600 °C, 1 Stunde), Hauptgemengerohstoffe (bezogen auf 1 kg Gemenge), freigesetzte Gase (in Millimol) und Bewertung der Glasqualität

| Beispiel-Nr. | 1 | 2 | 3 | 4 | 5 | 6 |
|---|---|---|---|---|---|---|
| **Hauptgemengerohstoffe** | | | | | | |
| Petalit | 577 g | | | | | |
| Spodumen Q1 | | 473 g | | | | |
| Spodumen Q2 | | | 760 g | 532 g | | |
| Lithiumkarbonat | | | | | 80 g | 80 g |
| Aluminiumtrihydroxid | 14g | 102 g | 86 g | 60 g | 264 g | 262 g |
| Quarzsand | 145 g | 302 g | 38 g | 27 g | 544 g | 540 g |
| Scherben | 0 g | 0 g | 0 g | 300 g | 0 g | 0 g |
| Anteil $Li_2O$-$Al_2O_3$-$SiO_2$-Verbindung | 57,7% | 47,3% | 76% | 76% | 0% | 0% |
| Anteil Quarzsand | 14,5% | 30,2% | 3,8% | 3,8% | 54,4% | 54,0% |
| **Gasfreisetzung (1kg Gemenge) [mMol]:** | | | | | | |
| Lithiumkarbonat | - | - | - | - | 1080 $CO_2$ | 1080 $CO_2$ |
| Natriumnitrat | 114 $NO_x$ | 146 $NO_x$ | 97 $NO_x$ | 68 $NO_x$ | 142 $NO_x$ | 142 $NO_x$ |
| Kaliumnitrat | 41 $NO_x$ | 50 $NO_x$ | - | - | 49 $NO_x$ | 49 $NO_x$ |
| Bariumkarbonat | 137 $CO_2$ | 140 $CO_2$ | 142 $CO_2$ | 100 $CO_2$ | 125 $CO_2$ | 125 $CO_2$ |
| Dolomit | 118 $CO_2$ | 129 $CO_2$ | 127 $CO_2$ | 89 $CO_2$ | 122 $CO_2$ | 122 $CO_2$ |
| Zinnoxid | 7 $O_2$ | 8 $O_2$ | 7 $O_2$ | 5 $O_2$ | 7 $O_2$ | - |
| Eisenoxid | 3 $O_2$ | 3 $O_2$ | 3 $O_2$ | 2 $O_2$ | 3 $O_2$ | 3 $O_2$ |
| Arsenoxid | - | - | - | - | - | 42 $O_2$ |
| Verhältnis in Mol: $O_2$/ $CO_2$+$NO_x$ | 0,024 | 0,024 | 0,027 | 0,027 | 0,007 | 0,030 |
| **Glasqualität:** | | | | | | |
| Visuelle Bewertung Schmelzoberfläche | 4 | 3-4 | 2 | 1 | 5 | 0 |
| Flächenanteil Gemengerelikte Rand / Mitte des Bohrkerns [Fl.%] | 50/20 | 30/35 | 20/5 | 10/2 | 60/50 | 5/5 |
| Cristobalitanteil für 2 mm dicke Oberflächenschicht [Vol.%] | 3,6 | 8,0 | 4,7 | 0,5 | 22 | < 0,1 |

Nach der angegebenen Zeit wurde der Platintiegel mit dem aufgeschmolzenen Gemenge entnommen und in einem Kühlofen, beginnend bei 680 °C das im Tiegel befindliche Glas mit einer Kühlrate von 20 K/min auf Raumtemperatur spannungsfrei abgekühlt. Das erkaltete Glas mit der Schmelzoberfläche wurde mit einem Diamanthohlbohrer aus dem Tiegel gebohrt und die erhaltenen Bohrkerne wurden hinsichtlich Qualität beurteilt. Der Durchmesser der Bohrkerne war 55 mm. Da die Versuche in einheitlicher Weise durchgeführt wurden, gestatten sie einen relativen Vergleich des Einschmelzverhaltens der verschiedenen Rohstoffe, insbesondere was die Ausbildung der Oberflächenschicht mit Gemengerelikten anbetrifft. Das Einschmelzverhalten der verschiedenen Rohstoffversätze wurde bei Versuchsbedingungen von 1600 °C, 1 Stunde untersucht.

Die Beispiele 1 bis 4 der Tabelle 2 sind erfindungsgemäße Beispiele mit variierten $Li_2O$-, $Al_2O_3$- und $SiO_2$-Verbindungen als dominierende Gemengerohstoffe. Die Beispiele 2 und 3 sind mit handelsüblichen Spodumen-Rohstoffen unterschiedlicher Qualitäten, das heißt unterschiedlicher $Li_2O$-Gehalte erschmolzen. Beispiel 4 enthält darüber hinaus 30 Gew.% von Scherben der gleichen Zusammensetzung wie das entstehende Glas. Das Beispiel 5 ist ein Vergleichsbeispiel mit Lithiumkarbonat und Kombinationsläuterung von Zinnoxid und Eisenoxid, das zu einem Glas gleicher Zusammensetzung führt. Die Beispiele 1 bis 5 führen zu einem Glas gleicher Zusammensetzung entsprechend dem Glas Nr. 1 aus Tabelle 1. Das Vergleichsbeispiel 6 entspricht dem Glas Nr. 2 der Tabelle 1 und wird mit Arsenoxid statt der Kombinationsläuterung geläutert. Die Tabelle 2 zeigt die Anteile der $Li_2O$-, $Al_2O_3$- und $SiO_2$-Verbindungen und des Quarzsandes bezogen auf 1 kg Rohstoffversatz für das Glasgemenge. Zugesetzte Scherben werden bei der Berechnung nicht berücksichtigt, haben aber eine zusätzliche Verbesserung des Einschmelzverhaltens und der Blasenqualität. Diese Hauptanteile des Gemenges bestehen aus marktüblichen Rohstoffqualitäten. Weiter werden die aus den gemäß Tabelle 1 eingesetzten Rohstoffen freiwerdenden unlöslichen Fremdgase und des maximal freigesetzten

$O_2$-Läutergases und deren Verhältnis bestimmt. Das bei der Nitratzersetzung freiwerdende Gas wird als $NO_x$-Fremdgas berechnet, eine etwaige Abspaltung von $O_2$ wird nicht berücksichtigt, da diese Reaktion bei Temperaturen stattfindet, die für einen Läutereffekt zu niedrig sind.

Die Ausbildung der Oberflächenschichten mit Gemengerelikten wurde zunächst visuell bewertet. Gegenüber dem vergleichsweise dunklen Glas sind die weißen Gemengerelikte an der Oberfläche deutlich zu erkennen. Bei der visuellen Bewertung wurde eine sehr starke Ausbildung mit 5 bewertet, eine mittlere Ausbildung mit 3 und bei keinen sichtbaren Gemengerelikten wurde eine 0 vergeben. Zusätzlich wurde die Oberfläche fotografiert und mit einer computergestützten Bildverarbeitung wurde der Flächenanteil der weißen nicht aufgelösten Gemengerelikte quantifiziert. Oberflächenblasen wurden für die Berechnung herausgefiltert. Da sich die Gemengerelikte abhängig vom Rohstoff meist am Rand des Platintiegels und damit auch am Rand des Bohrkerns anreichern, wurden die Werte für Rand und Mitte des Bohrkerns bestimmt.

Die erhaltenen Bohrkerne wurden zur Bewertung in Längsrichtung halbiert. Es wurde ein Querschliff hergestellt und eine ca. 4 mm dicke Scheibe poliert. Die Ausbildung von Gemengerelikten geht in die visuelle Bewertung ein.

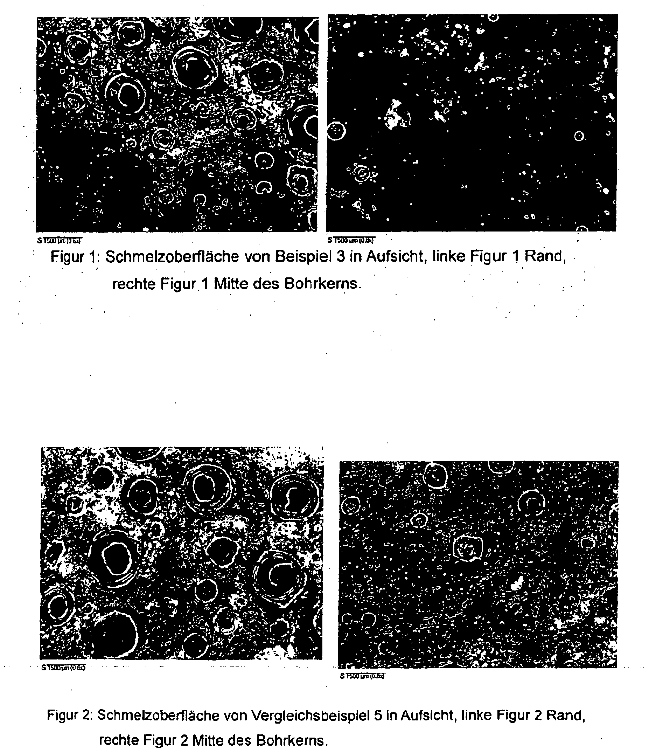

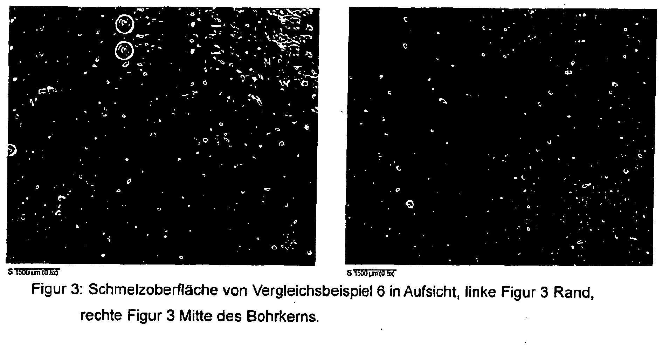

Die Figuren 1 bis 3 zeigen Schwarz-Weiß-Kopien von Fotos, jeweils in Aufsicht auf die Schmelzoberfläche vom Rand und Mitte der Bohrkerne. Figur 1 entspricht dem Beispiel 3 mit Spodumen und Kombinationsläuterung aus Eisenoxid und Zinnoxid. Figur 2 ist das Vergleichsbeispiel 5 mit Lithiumkarbonat und Kombinationsläuterung. Figur 3 ist das Vergleichsbeispiel 6 mit Lithiumkarbonat und Arsenläuterung entsprechend dem Vergleichsglas 2 aus Tabelle 1. Der Maßstab von 1500 $\mu$m ist eingeblendet.

Aus dem Bohrkern wurde ein Kreissektor von ca. 30° geschnitten und die Oberfläche der Glasschmelze wurde mit einer Dicke von 2 mm abgeschnitten. Dies entspricht der Tiefe bis zu der noch Gemengerelikte gefunden wurden. Das erhaltene Material wurde pulverisiert und mit Röntgenbeugung auf die Kristallphasen und ihre Anteile in Vol.% analysiert. Als alleinige Kristallphase wird der aus dem Quarzsand gebildete Cristobalit gefunden.

Bei lichtmikroskopischer Betrachtung wird an den Gemengeteilchen oft eine anhaftende Gasblase gefunden.

Aus den Ergebnissen ist die starke Abhängigkeit der Glasqualität vom Anteil des Quarzsands am Rohstoffversatz für das Glasgemenge zu erkennen.

Die gute Qualität, d.h. Homogenität und geringe bzw. keine Oberflächenschicht des Vergleichsbeispiels 6 mit Arsenläuterung wird auf die homogenisierende Wirkung der freisetzten $O_2$- Läuterblasen zurückgeführt. Da Arsenoxid den Läutersauerstoff schon bei vergleichsweise niedrigen Temperaturen und zudem in größeren Mengen freisetzt, wird hier eine Art Mikrorührerwirkung und daher gute Homogenisierung und gutes Einschmelzen ohne Oberflächenschicht erreicht. Die überlegene Qualität der erfindungsgemäßen Beispiele gegenüber dem Vergleichsbeispiel 5 mit Lithiumkarbonat zeigt, dass bei der Kombinationsläuterung mit Zinn- und Eisenoxid der verwendete Gemengerohstoff für die $Li_2O$- $Al_2O_3$- $SiO_2$- Verbindung ein starken Einfluss hat.

Bei einem zusätzlichen Beispiel Nr. 7 wurde eine Zusammensetzung gemäß Glas 1 aus Tabelle 1 und mit einem Rohstoffversatz für das Glasgemenge entsprechend Beispiel 4 aus Tabelle 2 großtechnisch erschmolzen. Die Schmelzwanne ist mit einem Brückenwall ausgerüstet. Die Beheizung erfolgt über Gasbrenner und über eine elektrische Zusatzheizung mit Elektroden, die in die Glasschmelze eingetaucht sind. Durch diese Beheizung wird beim Läutern im Bereich des Quellpunktes eine Glastemperatur von 1660 °C eingestellt. Auf eine Hochtemperaturläuterung bei Temperaturen >1700 °C wurde verzichtet. Die Blasenqualität des erhaltenen LAS-Glases betrug weniger als 0,5 Blasen/kg Glas. Es wurde bei der Formgebung ein genopptes Glasband von 4 mm Dicke hergestellt und zur Vermeidung von Spannungen in einem Kühlofen abgekühlt. Aus diesem Glasband wurden Kochflächen der Größe 500 x 500 x 4 mm geschnitten und in einem großtechnischen Rollenofen keramisiert. Bei der Keramisierung wurden die Platten für 25 min in einem Temperaturbereich von 700 bis 800 °C gekeimt und bei einer Maximaltemperatur von 910 °C, 10 min kristallisiert. Die erhaltenen Glaskeramiken verfügen über die gewünschten Transmissionswerte bei 4 mm Dicke von größer als 0,2 % im Bereich des sichtbaren Lichtes ab 450 nm. Bei 470 nm wird ein Transmissionswert von 0,4 % gemessen. Die thermische Ausdehnung zwischen 20 und 700 °C beträgt 0,2 • $10^{-6}$/K. Die Anforderungen, die von der Anwendung als Kochfläche gestellt werden, wie z. B. Temperaturbelastbarkeit, chemische Beständigkeit und Transmission werden vorteilhaft bedient.

**Patentansprüche**

1. Verfahren zum umweltfreundlichen Schmelzen und Läutern einer Glasschmelze für ein Ausgangsglas einer Lithium-Aluminium-Silikat (LAS)-Glaskeramik,
**gekennzeichnet durch** die Schritte:

   - Bereitstellen eines Glasgemenges auf der Basis eines Lithium-Aluminium-Silikat (LAS)-Glassystems mit Zusatz von 0,1 - < 0,6 Gew. % Zinnoxid als Hauptläutermittel und 0,05 - 0,3 Gew. % Eisenoxid für eine Kombinationsläuterung unter Verzicht von Arsen- und/oder Antimonoxid als Läutermittel,

- Auslegen des Rohstoffversatzes für das Glasgemenge dahingehend, dass der Anteil des für die Einführung der Glaskomponente $SiO_2$ üblicherweise verwendeten Rohstoffs Quarzsand weniger als 40 Gew. %, bevorzugt weniger als 15 Gew. %, und besonders bevorzugt weniger als 5 Gew. % beträgt, und
- Läutern der Glasschmelze bei Temperaturen von mindestens 1600 °C und bevorzugt mindestens 1650 °C.

2. Verfahren nach Anspruch 1,
**dadurch gekennzeichnet,**
**dass** eine $Li_2O$-$Al_2O_3$-$SiO_2$-Verbindung als Hauptgemengerohstoff eingesetzt wird, die mindestens 45 Gew. % und bevorzugt mindestens 70 Gew. % des Rohstoffversatzes ausmacht.

3. Verfahren nach Anspruch 2,
**dadurch gekennzeichnet,**
**dass** als Hauptgemengerohstoff Petalit, und/oder Spodumen eingesetzt werden.

4. Verfahren nach einem der Ansprüche 1 bis 3,
**dadurch gekennzeichnet,**
**dass** ein Glasgemenge für ein LAS-Glassystem bereitgestellt wird, bei dem das Verhältnis der bei der Läuterung maximal freigesetzten Menge des $O_2$ -Läutergases (in Mol) zu der Menge, der bei der Gemengezersetzung freiwerdenden unlöslichen Fremdgase (in Mol) der Bedingung genügt:

$$O_2 \ [Mol] / Fremdgase \ [Mol] \ > \ 0{,}02$$

5. Verfahren nach einem der Ansprüche 1 bis 4,
**dadurch gekennzeichnet,**
**dass** dem Glasgemenge zusätzlich 20 bis 60 Gew. % als Scherben zugesetzt werden.

6. Verfahren nach einem der Ansprüche 1 bis 5,
**dadurch gekennzeichnet,**
**dass** die Infrarotabsorption der Glasschmelze auf Werte eingestellt wird, die bei Raumtemperatur und 4 mm Dicke einer IR-Transmission bei 1600 nm von 40 - 80 % entsprechen.

7. Verfahren nach einem der Ansprüche 1 bis 6,
**dadurch gekennzeichnet,**
**dass** die Läuterung bei einer Temperatur der Glasschmelze von weniger als 1700°C, unter Verzicht auf zusätzliche spezielle Hochtemperaturläuter-aggregate durchgeführt wird.

8. Verfahren nach einem der Ansprüche 1 bis 6,
**dadurch gekennzeichnet,**
**dass** die Läuterung bei einer Temperatur der Glasschmelze von größer als 1700°C, bevorzugt größer als 1750°C durchgeführt wird.

9. Verfahren nach einem der Ansprüche 1 bis 8,
**dadurch gekennzeichnet,**
**dass** der Durchsatz des Schmelzaggregats bzw. die mittlere Verweilzeit des Glases so gewählt wird, dass eine Blasenzahl von weniger als 3 Blasen/kg Glas, bevorzugt weniger als 1 Blase/kg Glas erreicht wird.

10. Verfahren nach einem der Ansprüche 1 bis 9,
**dadurch gekennzeichnet,**
**dass** ein Glasgemenge für ein LAS -Gfassystem bereitgestellt wird, das zu einer eingefärbten Glaskeramik mit Hochquarz-Mischkristallen als vorherrschende Kristallphase führt, mit einer Zusammensetzung in Gew. % auf Oxidbasis, die im wesentlichen besteht aus:

| | |
|---|---|
| $Li_2O$ | 3,0 - 4,2 |

(fortgesetzt)

| | |
|---|---|
| ∑ $Na_2O+K_2O$ | 0,2 - 1,5 |
| MgO | 0 - 1,5 |
| ∑ $CaO+SrO+BaO$ | 0 - 4 |
| ZnO | 0 - 2 |
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |
| $P_2O_5$ | 0 - 3 |
| $SnO_2$ | 0,1 - < 0,6 |
| ∑ $TiO_2+ZrO_2+SnO_2$ | 3,8 - 6 |
| $V_2O_5$ | 0,01 - 0,06 |
| $Fe_2O_3$ | 0,05 - 0,3. |

**11.** Verfahren nach einem der Ansprüche 1 bis 10,
**dadurch gekennzeichnet,**
**dass** ein Glasgemenge für ein LAS -Glassystem bereitgestellt wird, das zu einer eingefärbten Glaskeramik mit Hochquarz-Mischkristallen als vorherrschende Kristallphase führt, mit einer Zusammensetzung in Gew. % auf Oxidbasis, die im wesentlichen besteht aus:

| | |
|---|---|
| $Li_2O$ | 3,2 - 4,0 |
| $Na_2O$ | 0,2 - 1 |
| $K_2O$ | 0,1 - 1 |
| ∑ $Na_2O+K_2O$ | 0,4 - 1,2 |
| MgO | 0,1 - 1,2 |
| CaO | 0,2 - 1 |
| SrO | 0 - 1 |
| BaO | 0 - 3 |
| ∑ $CaO+SrO+BaO$ | 0,2 - 4 |
| ZnO | 0 - 1,8 |
| $B_2O_3$ | 0 - 1 |
| $Al_2O_3$ | 19-22 |
| $SiO_2$ | 62 - 67 |
| $TiO_2$ | 2,8-4 |
| $ZrO_2$ | 0,5 - 1,6 |
| $P_2O_5$ | 0-1,5 |
| $SnO_2$ | 0,1 - 0,5 |
| ∑ $TiO_2+ZrO_2+SnO_2$ | 4,2 - 6 |
| $V_2O_5$ | 0,01 - 0,05 |
| $Fe_2O_3$ | 0,08 - 0,15. |

**12.** Verfahren nach einem der Ansprüche 1 bis 11,
**dadurch gekennzeichnet,**
**dass** ein Glasgemenge für ein LAS-Glassystem bereitgestellt wird, mit einem Läutermittelgehalt von Zinnoxid < 0,35 Gew. %, bevorzugt < 0,3 Gew. %.

**13.** Verfahren nach einem der Ansprüche 1 bis 12,
**dadurch gekennzeichnet,**
**dass** ein Glasgemenge für ein LAS-Glassystem bereitgestellt wird, mit einem $V_2O_5$-Gehalt von weniger als 0,04 Gew. %, bevorzugt weniger als 0,03 Gew. %.

**Claims**

1. Process for the environmentally friendly melting and refining of a glass melt for a starting glass for a lithium-aluminium silicate (LAS) glass-ceramic, **characterized by** the steps:

   - provision of a glass mix based on a lithium-aluminium silicate (LAS) glass system with addition of 0.1 - < 0.6% by weight of tin oxide as main refining agent and 0.05 - 0.3% by weight of iron oxide for combination refining with omission of arsenic oxide and/or antimony oxide as refining agent,
   - designing of the raw materials batch for the glass mix so that the proportion of the raw material silica sand usually used for introducing the glass component $SiO_2$ is less than 40% by weight, preferably less than 15% by weight and particularly preferably less than 5% by weight and
   - refining of the glass melt at temperatures of at least 1600°C and preferably at least 1650°C.

2. Process according to Claim 1, **characterized in that** a $Li_2O$-$Al_2O_3$-$SiO_2$ compound is used as main mix raw material which makes up at least 45% by weight and preferably at least 70% by weight of the raw materials batch.

3. Process according to Claim 2, **characterized in that** petalite and/or spodumene are used as main mix raw material.

4. Process according to any of Claims 1 to 3, **characterized in that** a glass mix for an LAS glass system, wherein the ratio of the maximum amount of the $O_2$ refining gas (in mol) liberated during refining to the amount of the insoluble foreign gases (in mol) liberated during the decomposition of the mix satisfies the condition: $O_2$ [mol]/foreign gases [mol] > 0.02, is provided.

5. Process according to any of Claims 1 to 4, **characterized in that** from 20 to 60% by weight of broken glass is additionally added to the glass mix.

6. Process according to any of Claims 1 to 5, **characterized in that** the infrared absorption of the glass melt is set to values which at room temperature and a thickness of 4 mm correspond to an IR transmission at 1600 nm of 40 - 80%.

7. Process according to any of Claims 1 to 6, **characterized in that** refining is carried out at a temperature of the glass melt of less than 1700°C without use of additional specific high-temperature refining apparatuses.

8. Process according to any of Claims 1 to 6, **characterized in that** refining is carried out at a temperature of the glass melt of greater than 1700°C, preferably greater than 1750°C.

9. Process according to any of Claims 1 to 8, **characterized in that** the throughput through the melting apparatus or the average residence time of the glass is selected so that a bubble count of less than 3 bubbles/kg of glass, preferably less than 1 bubble/kg of glass, is achieved.

10. Process according to any of Claims 1 to 9, **characterized in that** a glass mix for an LAS glass system which leads to a coloured glass-ceramic having high-quartz mixed crystals as predominant crystal phase and having a composition in % by weight on an oxide basis which consists essentially of:

| | |
|---|---|
| $Li_2O$ | 3.0 - 4.2 |
| $\Sigma$ $Na_2O$+$K_2O$ | 0.2 - 1.5 |
| MgO | 0 - 1.5 |
| $\Sigma$ CaO+SrO+BaO | 0 - 4 |
| ZnO | 0 - 2 |
| $B_2O_3$ | 0 - 2 |
| $Al_2O_3$ | 19 - 23 |
| $SiO_2$ | 60 - 69 |
| $TiO_2$ | 2.5 - 4 |
| $ZrO_2$ | 0.5 - 2 |
| $P_2O_5$ | 0 - 3 |
| $SnO_2$ | 0.1 - < 0.6 |
| $\Sigma$ $TiO_2$+$ZrO_2$+$SnO_2$ | 3.8 - 6 |

(continued)

| | |
|---|---|
| V$_2$O$_5$ | 0.01 - 0.06 |
| Fe$_2$O$_3$ | 0.05 - 0.3 |

is provided.

11. Process according to any of Claims 1 to 10, **characterized in that** a glass mix for an LAS glass system which leads to a coloured glass-ceramic having high-quartz mixed crystals as predominant crystal phase and has a composition in % by weight on an oxide basis which consists essentially of:

| | |
|---|---|
| Li$_2$O | 3.2 - 4.0 |
| Na$_2$O | 0.2 - 1 |
| K$_2$O | 0.1 - 1 |
| $\sum$ Na$_2$O+K$_2$O | 0.4 - 1.2 |
| MgO | 0.1 - 1.2 |
| CaO | 0.2 - 1 |
| SrO | 0 - 1 |
| BaO | 0 - 3 |
| $\sum$ CaO+SrO+BaO | 0.2 - 4 |
| ZnO | 0 - 1.8 |
| B$_2$O$_3$ | 0 - 1 |
| Al$_2$O$_3$ | 19 - 22 |
| SiO$_2$ | 62 - 67 |
| TiO$_2$ | 2.8 - 4 |
| ZrO$_2$ | 0.5 - 1.6 |
| P$_2$O$_5$ | 0 - 1.5 |
| SnO$_2$ | 0.1 - 0.5 |
| $\sum$ TiO$_2$+ZrO$_2$+SnO$_2$ | 4.2 - 6 |
| V$_2$O$_5$ | 0 . 01 - 0.05 |
| Fe$_2$O$_3$ | 0.08 - 0.15 |

is provided.

12. Process according to any of Claims 1 to 11, **characterized in that** a glass mix for an LAS glass system having a refining agent content of tin oxide of < 0.35% by weight, preferably < 0.3% by weight, is provided.

13. Process according to any of Claims 1 to 12, **characterized in that** a glass mix for an LAS glass system having a V$_2$O$_5$ content of less than 0.04% by weight, preferably less than 0.03% by weight, is provided.

## Revendications

1. Procédé pour la fusion et l'affinage respectueux de l'environnement d'un bain de verre pour un verre initial d'une vitrocéramique au lithium-aluminium-silicate (LAS),
**caractérisé par** les étapes :

- disposition d'une fritte de verre à base d'un système de verre au lithium-aluminium-silicate (LAS) avec addition de 0,1 - < 0,6 % en poids d'oxyde d'étain en tant qu'agent d'affinage principal et 0,05 - 0,3 % en poids d'oxyde de fer pour un affinage avec une association de composants, avec abandon de l'utilisation d'oxyde d'arsenic et/ou d'oxyde d'antimoine en tant qu'agent d'affinage,
- mise en place du mélange de matières de premières pour la fritte de verre de manière que la proportion de la matière première sable quartzeux habituellement utilisée pour l'introduction du composant de verre SiO$_2$ soit inférieure à 40 % en poids, de préférence inférieure à 15 % en poids, et de façon particulièrement préférée inférieure à 5 % en poids, et

- affinage du verre fondu, à des températures d'au moins 1 600 °C et de préférence d'au moins 1 650 °C.

2. Procédé selon la revendication 1,
   **caractérisé en ce**
   **qu'**on utilise comme matière première principale de la fritte un composé $Li_2O$-$Al_2O_3$-$SiO_2$, qui représente au moins 45 % en poids et de préférence au moins 70 % en poids du mélange de matières premières.

3. Procédé selon la revendication 2,
   **caractérisé en ce que**
   comme matière première principale de la fritte utilise de la pétalite et/ou du spodumène.

4. Procédé selon l'une quelconque des revendications 1 à 3,
   **caractérisé en ce**
   **qu'**on prépare pour un système de verre LAS une fritte de verre dans laquelle le rapport de la quantité du gaz d'affinage-$O_2$ (en moles) libérée au maximum lors de l'affinage à la quantité (en moles) des gaz étrangers insolubles se libérant lors de décomposition de la fritte satisfait à la condition :

$$O_2 \text{ [moles]/gaz étrangers [moles]} > 0,02.$$

5. Procédé selon l'une quelconque des revendications 1 à 4,
   **caractérisé en ce**
   **qu'**on ajoute en outre à la fritte de verre 20 à 60 % en poids en tant que calcin.

6. Procédé selon l'une quelconque des revendications 1 à 5,
   **caractérisé en ce**
   **qu'**on ajuste l'absorption infrarouge du verre fondu à des valeurs qui, à la température ambiante et pour une épaisseur de 4 mm, correspondent à une transmission IR à 1 600 nm de 40 - 80 %.

7. Procédé selon l'une quelconque des revendications 1 à 6,
   **caractérisé en ce**
   **qu'**on effectue l'affinage à une température du verre fondu de moins de 1 700 °C, avec abandon de l'utilisation d'unités spéciales d'affinage à haute température supplémentaires.

8. Procédé selon l'une quelconque des revendications 1 à 6,
   **caractérisé en ce**
   **qu'**on effectue l'affinage à une température du verre fondu de plus de 1 700 °C, de préférence de plus de 1 750 °C.

9. Procédé selon l'une quelconque des revendications 1 à 8,
   **caractérisé en ce**
   **qu'**on choisit le débit de l'unité de fusion ou le temps moyen de séjour du verre de manière à parvenir à un nombre de bulles de moins de 3 bulles/kg de verre, de préférence de moins de 1 bulle/kg de verre.

10. Procédé selon l'une quelconque des revendications 1 à 9,
    **caractérisé en ce**
    **qu'**on prépare une fritte de verre pour un système de verre LAS, conduisant à une vitrocéramique colorée comportant en tant que phase cristalline prédominant des cristaux mixtes à forte teneur en quartz, ayant une composition en % en poids, sur la base des oxydes, qui consiste essentiellement en :

| | |
|---|---|
| $Li_2O$ | 3,0 - 4,2 |
| $\sum Na_2O+K_2O$ | 0,2 - 1,5 |
| MgO | 0 - 1,5 |
| $\sum CaO+SrO+BaO$ | 0 - 4 |
| ZnO | 0 - 2 |

(suite)

| | |
|---|---|
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |
| $P_2O_5$ | 0 - 3 |
| $SnO_2$ | 0,1 - <0,6 |
| $\sum TiO_2+ZrO_2+SnO_2$ | 3,8 - 6 |
| $V_2O_5$ | 0,01 - 0,06 |
| $Fe_2O_3$ | 0,05 - 0,3. |

**11.** Procédé selon l'une quelconque des revendications 1 à 10, **caractérisé en ce qu'**on prépare une fritte de verre pour un système de verre LAS, conduisant à une vitrocéramique colorée comportant en tant que phase cristalline prédominante des cristaux mixtes à forte teneur en quartz, ayant une composition en % en poids, sur la base des oxydes, qui consiste essentiellement en :

| | |
|---|---|
| $Li_2O$ | 3,2 - 4,0 |
| $Na_2O$ | 0,2 - 1 |
| $K_2O$ | 0,1 - 1 |
| $\sum Na_2O+K_2O$ | 0,4 - 1,2 |
| $MgO$ | 0,1 - 1,2 |
| $CaO$ | 0,2 - 1 |
| $SrO$ | 0 - 1 |
| $BaO$ | 0 - 3 |
| $\sum CaO+SrO+BaO$ | 0,2 - 4 |
| $ZnO$ | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |
| $ZrO_2$ | 0,5 - 1,6 |
| $P_2O_5$ | 0 - 1,5 |
| $SnO_2$ | 0,1 - 0,5 |
| $\sum TiO_2+ZrO_2+SnO_2$ | 4,2 - 6 |
| $V_2O_5$ | 0,01 - 0,05 |
| $Fe_2O_3$ | 0,08 - 0,15. |

**12.** Procédé selon l'une quelconque des revendications 1 à 11, **caractérisé en ce qu'**on prépare une fritte de verre pour un système de verre LAS, ayant une teneur de l'agent d'affinage en oxyde d'étain < 0,35 % en poids, de préférence < 0,3 % en poids.

**13.** Procédé selon l'une quelconque des revendications 1 à 12, **caractérisé en ce qu'**on prépare une fritte de verre pour un système de verre LAS, ayant une teneur en $V_2O_5$ de moins de 0,04 % en poids, de préférence de moins de 0,03 % en poids.

Figur 1: Schmelzoberfläche von Beispiel 3 in Aufsicht, linke Figur 1 Rand, rechte Figur 1 Mitte des Bohrkerns.

Figur 2: Schmelzoberfläche von Vergleichsbeispiel 5 in Aufsicht, linke Figur 2 Rand, rechte Figur 2 Mitte des Bohrkerns.

S̄ T500 µm (0.5d)    S̄ T500 µm (0.5d)

Figur 3: Schmelzoberfläche von Vergleichsbeispiel 6 in Aufsicht, linke Figur 3 Rand,
rechte Figur 3 Mitte des Bohrkerns.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11100229 A
- JP 11100230 A
- US 20070004578 A1
- US 20080026927 A1
- US 20070129231 A1
- DE 19939771 B4
- WO 0216279 A1
- DE 19939787 A1
- EP 0908417 A2
- DE 102005039919 A1

**In der Beschreibung aufgeführte Nicht-Patentliteratur**

- **H. A. SCHAEFFER.** Grundlagen des Schmelzens und der Formgebung. *Allgemeine Technologie des Glases,* September 1985
- **NÖLLE ; GÜNTHER.** Technik der Glasherstellung. Deutscher Verlag für Grundstoffindustrie, 1997, 83